(19) Europäisches Patentamt / European Patent Office / Office européen des brevets

(11) EP 4 629 391 A1

(12) EUROPEAN PATENT APPLICATION
published in accordance with Art. 153(4) EPC

(43) Date of publication:
**08.10.2025 Bulletin 2025/41**

(21) Application number: **24760616.3**

(22) Date of filing: **23.02.2024**

(51) International Patent Classification (IPC):
***H01M 10/058*** *(2010.01)* ***H01M 4/04*** *(2006.01)*
***H01M 4/505*** *(2010.01)* ***H01M 4/525*** *(2010.01)*
***H01M 10/052*** *(2010.01)* ***H01M 4/02*** *(2006.01)*

(52) Cooperative Patent Classification (CPC):
**H01M 4/02; H01M 4/04; H01M 4/505; H01M 4/525; H01M 10/052; H01M 10/058;** Y02E 60/10; Y02P 70/50

(86) International application number:
**PCT/KR2024/002381**

(87) International publication number:
**WO 2024/177427 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.02.2023 KR 20230024513**

(71) Applicant: **LG Energy Solution, Ltd.**
**Seoul 07335 (KR)**

(72) Inventors:
- **KANG, Hyeyeon**
  **Daejeon 34122 (KR)**
- **KIM, Su Hwan**
  **Daejeon 34122 (KR)**
- **PARK, Sin Young**
  **Daejeon 34122 (KR)**
- **SUNG, Kiwon**
  **Daejeon 34122 (KR)**
- **LEE, Byoungsoo**
  **Daejeon 34122 (KR)**
- **PARK, Jinseo**
  **Daejeon 34122 (KR)**
- **KANG, Bohyun**
  **Daejeon 34122 (KR)**
- **JANG, Daeun**
  **Daejeon 34122 (KR)**
- **JO, Youngseong**
  **Daejeon 34122 (KR)**
- **LEE, Youshin**
  **Daejeon 34122 (KR)**

(74) Representative: **Hoffmann Eitle**
**Patent- und Rechtsanwälte PartmbB**
**Arabellastraße 30**
**81925 München (DE)**

# (54) METHOD FOR MANUFACTURING LITHIUM SECONDARY BATTERY

(57) The present disclosure relates to a method for manufacturing a lithium secondary battery, the method comprising the steps of: preparing a battery cell including a positive electrode, a negative electrode and an electrolyte, wherein the positive electrode includes lithium-rich manganese-based oxide in which the content of manganese in all metals excluding lithium is greater than 50 mol%, and a ratio of the number of moles of lithium to the number of moles of all metals excluding lithium(Li/Me) is greater than 1; and charging and discharging the battery cell at least one or more times to activate the battery, wherein the activating step includes ending the charging when a ratio(Y/X) of the charge capacity(mAh/g) (Y) of a secondary battery to the estimated capacity(mAh/g) (X) of a positive electrode active material at a point where all lithium ions contained in the lithium-rich manganese-based oxide form a Li/Li dumbbell structure corresponds to $1.10 < Y/X \leq 1.13$.

EP 4 629 391 A1

【FIG. 3】

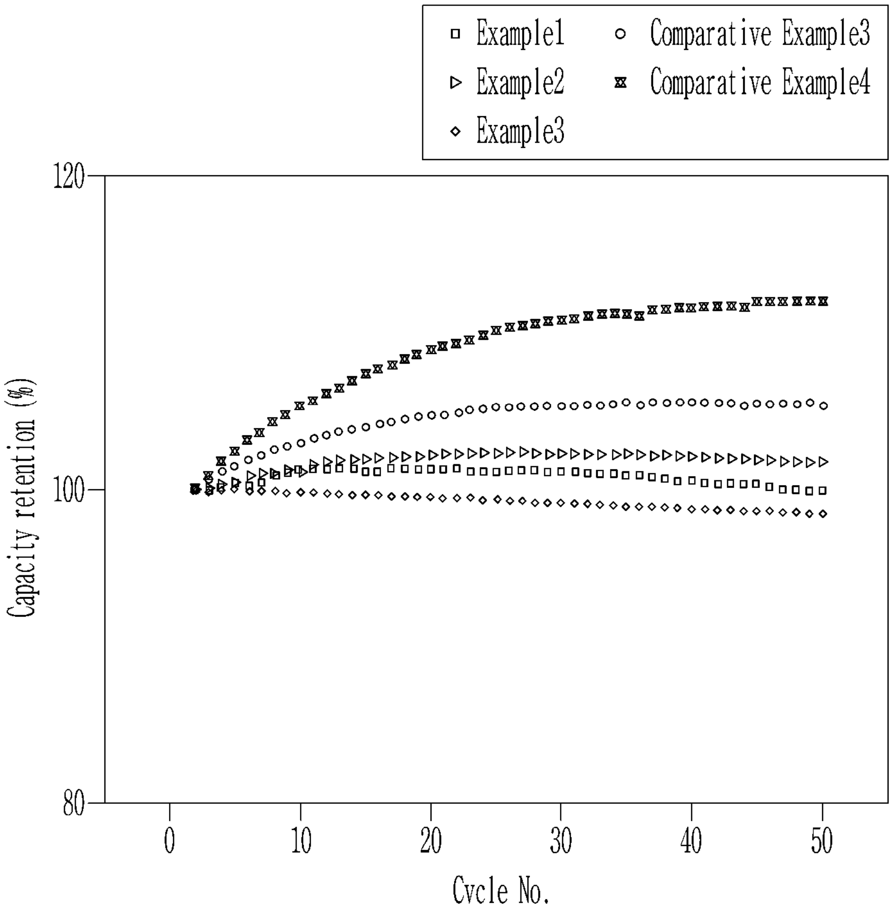
Example1
Comparative Example3
Example2
Comparative Example4
Example3
120
100
80
Capacity retention (%)
0
10
20
30
40
50
Cycle No.

## Description

## [TECHNICAL FIELD]

Cross Citation with Related Application so

This application claims the benefit priority from of Korean Patent Application No. 10-2023-0024513 filed on February 23, 2023 and Korean Patent Application No. 10-2024-0026192 filed on February 23, 2024 in the Korean Intellectual Property Office, the disclosures of which are incorporated herein by reference in their entirety.

The present disclosure relates to a method for manufacturing a lithium secondary battery, and more specifically, to a method for manufacturing a lithium secondary battery that can suppress the generation of oxidizing gas induced in an activating step of a lithium secondary battery containing a lithium-rich manganese-based oxide.

## [BACKGROUND]

Lithium secondary batteries are energy storage media that have been applied in various fields since they were commercially introduced in 1991. As the market for products equipped with lithium secondary batteries expands, research to increase the energy density of lithium secondary batteries has been actively conducted. One of the methods that is attracting the most attention is developing a positive electrode active material with a composition that can utilize a larger amount of lithium than before.

As a positive electrode active material that can utilize a larger amount of lithium, lithium-rich transition metal oxides having a layered structure and having a molar ratio of lithium to transition metal of greater than 1 have been developed. Such a lithium-rich transition metal oxide can achieve high capacity by performing the activating step at a high voltage of 4.4V or more.

However, when such a high-voltage activating step is performed, oxygen desorption and cation mixing are induced in the crystal structure of the lithium-rich transition metal oxide, which causes a problem that the resistance of the positive electrode is significantly increased. Specifically, during the high-voltage activating step, the positive electrode structure changes as lithium ions are desorbed, and formation/desorption of oxygen radicals occurs through an oxygen redox reaction, and large amounts of oxidizing gases such as CO, $CO_2$, and $O_2$ may be generated due to side reactions between oxygen radicals and the electrolyte. Moreover, under high voltage activation conditions, the electrolyte may be decomposed and large amounts of oxidizing gas may be generated.

When a large amount of oxidizing gas is generated in this way, the pressure inside the cell increases, causing a short circuit, making it difficult to separate from the jig, and inducing lithium plating due to the gas trap, which limits the stability and the charge/discharge capacity.

Therefore, there is a need to develop a method that can suppress the generation of oxidizing gas during the high-voltage activating step.

[Prior Art Literature]

[Patent Literature]
Korean Unexamined Patent Publication No. 2022-0068016

## [DETAILED DESCRIPTION OF THE INVENTION]

## [Technical Problem]

The present disclosure has been designed to solve the above-mentioned problems, and therefore, an object of the present disclosure is to provide a method for manufacturing a lithium secondary battery that can suppress the generation of oxidizing gas induced during the high-voltage activating step.

## [Technical Solution]

According to one aspect of the present disclosure, there is provided a method for manufacturing a lithium secondary battery, the method comprising the steps of:

preparing a battery cell including a positive electrode, a negative electrode and an electrolyte, wherein the positive electrode includes lithium-rich manganese-based oxide in which the content of manganese in all metals excluding lithium is greater than 50 mol%, and a ratio of the number of moles of lithium to the number of moles of all metals

excluding lithium(Li/Me) is greater than 1; and

charging and discharging the battery cell at least one or more times to activate the battery,

wherein the activating step includes ending the charging when a ratio(Y/X) of the charge capacity(mAh/g) (Y) of a secondary battery to the estimated capacity(mAh/g) (X) of a positive electrode active material at a point where all lithium ions contained in the lithium-rich manganese-based oxide form a Li/Li dumbbell structure corresponds to $1.10 < Y/X \leq 1.13$.

Meanwhile, the estimated capacity(C) (mAh/g) of the positive electrode active material may be calculated using the following Equation 1.

[Equation 1]

$$C\ (mAh/g) = Q \times (i/100)$$

in Equation 1,

Q is the theoretical capacity(mAh/g) of lithium-rich manganese-based oxide, and

i is the percentage(%) of the molar ratio of lithium ions moved until only lithium ions forming a Li/Li dumbbell structure exist, to the total molar ratio of lithium ions contained in lithium-rich manganese-based oxide, and may be defined by the following Equation 2:

[Equation 2]

$$i(\%) = \left\{1 - \frac{\left(2 \times \left|Li\ molar\ ratio - 1\right|\right)}{Li\ molar\ ratio}\right\} \times 100(\%)$$

in Equation 2, Li molar ratio is the total molar ratio of lithium ions contained in the lithium-rich manganese-based oxide.

Further, the activating step may include a step of charging from 4.5V to 4.6V at 0.3C to 1.0C.

The charging step may be performed in a constant current mode (CC mode) or a constant current-constant voltage mode (CCCV mode), and the cut-off current at the constant voltage charging mode may be 0.05C to 0.15C.

**[BRIEF DESCRIPTION OF THE DRAWINGS]**

FIG. 1 is a graph showing the results of evaluating the amount of gas generated during the activating step according to Experimental Example 1.

FIG. 2 is a graph showing the initial resistance evaluation results according to Experimental Example 2.

FIG. 3 is a graph showing the results of the capacity retention in the high-temperature cycle evaluation according to Experimental Example 3.

FIG. 4 is a diagram for explaining the structural changes of the lithium-rich manganese-based oxide and the presence or absence of oxidized gas generation depending on the progress of charging in the activating step.

FIG. 5 is a graph showing the rate of change in lithium concentration (Li site concentration) based on the lithium site of the $Li_x(Ni_{0.5}Mn_{0.5})O_2$ compound.

**[DETAILED DESCRIPTION OF THE EMBODIMENTS]**

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

In the present disclosure, "primary particle" refers to a particle unit in which grain boundaries do not appear to exist when observed with the field of view of 5000 to 20000 magnification using a scanning electron microscope. "Average particle size of primary particles" refers to the arithmetic average value of primary particles observed in a scanning electron

microscope image calculated after measuring their particle sizes.

In the present disclosure, "secondary particle" is a particle formed by agglomerating a plurality of primary particles.

In the present disclosure, "average particle size $D_{50}$" means a particle size at which cumulative volumes of powder particles (e.g., positive electrode active material, negative electrode active material, etc.) reach 50% in the particle size distribution curve of the particles. The $D_{50}$ can be measured using a laser diffraction method. It can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution, and determining the particle size corresponding to 50% of cumulative volume.

Further, in the present disclosure, "SOC X" refers to a state where the percentage of the capacity charged in the battery cell based on the discharge capacity appearing when the battery cell is discharged from 4.6 V to 2.0 V is X.

The present inventors have conducted repeated research to suppress the generation of oxidizing gas during the activation process of a lithium secondary battery using lithium-rich manganese-based oxide, and as a result, found that by adjusting the charge end point, it is possible to suppress the generation of oxidizing gas during the high-voltage activation process, and completed the present disclosure.

Now, the present disclosure will be described in detail.

### <Method for manufacturing lithium secondary battery>

A method for manufacturing a lithium secondary battery according to the present disclosure includes:

a step of preparing a battery cell including a positive electrode, a negative electrode and an electrolyte, wherein the positive electrode includes lithium-rich manganese-based oxide in which the content of manganese in all metals excluding lithium is greater than 50 mol%, and a ratio of the number of moles of lithium to the number of moles of all metals excluding lithium (Li/Me) is greater than 1; and
a step of charging and discharging the battery cell at least one or more times to activate the battery,
wherein the activating step includes a step of ending the charging when a ratio (Y/X) of the charge capacity(mAh/g) (Y) of a secondary battery to the estimated capacity(mAh/g) (X) of a positive electrode active material at a point where all lithium ions contained in the lithium-rich manganese-based oxide form a Li/Li dumbbell structure corresponds to $1.10 < Y/X \leq 1.13$.

### (1) Step of preparing battery cell

First, a battery cell including a positive electrode, a negative electrode, and an electrolyte is prepared.

The battery cell can be prepared, for example, by forming an electrode assembly including a positive electrode and a negative electrode, housing the electrode assembly in a battery case, and then injecting an electrolyte to seal a battery case. At this time, the electrode assembly may include a separator between the positive electrode and the negative electrode.

Each component of the battery cell according to the present disclosure will be described in more detail below.

#### Positive electrode

The positive electrode according to the present disclosure includes lithium-rich manganese-based oxide in which the content of manganese in all metals excluding lithium is greater than 50 mol%, and the ratio of the number of moles of lithium to the number of moles of all metals excluding lithium(Li/Me) is greater than 1. Specifically, the positive electrode according to the present disclosure includes a positive electrode current collector, and a positive electrode active material layer formed on at least one surface of the positive electrode current collector, wherein the positive electrode active material layer includes a lithium-rich manganese-based oxide in which the ratio of the number of moles of lithium to the number of moles of all metals excluding lithium (Li/Me) is greater than 1.

In the case of lithium-rich manganese-based oxide containing excessive lithium, it has a structure of layered phase ($LiM'O_2$) and rock-salt phase ($Li_2MnO_3$) are mixed. During the initial activation process, the rock-salt phase is activated and excessive lithium ions are generated, thereby achieving high capacity.

Preferably, the lithium-rich manganese-based oxide may be represented by the following Chemical Formula 1.

[Chemical Formula 1]

$$Li_aNi_bCo_cMn_dM_eO_2$$

wherein, in Chemical Formula 1, M may be at least one selected from the group consisting of Al, B, Co, W, Mg, V, Ti, Zn, Ga, In, Ru, Nb, Sn, Sr and Zr.

Meanwhile, a is the molar ratio of Li in the lithium-rich manganese-based oxide, and may be $1<a$, $1.1\leq a\leq 1.5$, or $1.1\leq a\leq 1.3$.

The b is the molar ratio of Ni in the lithium-rich manganese-based oxide, and may be $0\leq b\leq 0.5$, $0.1\leq b\leq 0.4$ or $0.2\leq b\leq 0.4$.

The c is the molar ratio of Co in the lithium-rich manganese-based oxide, and may be $0\leq c\leq 0.1$, $0\leq c\leq 0.08$, or $0\leq c\leq 0.05$. If c is greater than 0.1, it is difficult to secure high capacity, and generation of gas and deterioration of the positive electrode active material become intensified, and the life characteristics may deteriorate.

The d is the molar ratio of Mn in the lithium-rich manganese-based oxide, and may be $0.50\leq d<1.0$, $0.50\leq d\leq 0.80$, or $0.50\leq d\leq 0.70$. If d is less than 0.5, the proportion of the rock-salt phase becomes too small, and thus the effects of negative electrode irreversibility compensation and capacity improvement are slight.

The e is the molar ratio of the doping element M in the lithium-rich manganese-based oxide, and may be $0\leq e\leq 0.2$, $0\leq e\leq 0.1$ or $0\leq e\leq 0.05$. If the content of the doping element is too high, it may have an adverse effect on the capacity of the active material.

Meanwhile, in the lithium-rich manganese-based oxide represented by [Chemical Formula 1], the ratio (Li/Me) of the number of moles of Li to the number of moles of all metal elements excluding Li may be 1.2 ~ 1.5, 1.25 ~ 1.5, or 1.25 ~ 1.4. When Li/Me ratio satisfies the above range, rate characteristics and capacity characteristics can excellently exhibit. When Li/Me ratio is too high, electrical conductivity may decrease, and the rock-salt phase ($Li_2MnO_3$) may increase, which may increase the degradation rate. When Li/Me ratio is too low, the effect of improving energy density is slight.

Meanwhile, the composition of the lithium-rich manganese-based oxide may be represented by the following [Chemical Formula 2].

[Chemical Formula 2]

$$X\ Li_2MnO_3\cdot(1-X)Li[Ni_{1-y-z-w}Mn_yCo_zM_w]O_2$$

wherein, in [Chemical Formula 2], M may be at least one metal ion selected from the group consisting of Al, B, Co, W, Mg, V, Ti, Zn, Ga, In, Ru, Nb, Sn, Sr and Zr.

The X refers to the ratio of the $Li_2MnO_3$ phase in the lithium-rich manganese-based oxide, and may be $0.2\leq X\leq 0.5$, $0.25\leq X\leq 0.5$, or $0.25\leq X\leq 0.4$. When the ratio of the $Li_2MnO_3$ phase in the lithium-rich manganese-based oxide satisfies the above range, high capacity characteristics can be realized.

The y is the molar ratio of Mn on the $LiM'O_2$ layer, and may be $0.4\leq y<1$, $0.4\leq y\leq 0.8$, or $0.4\leq y\leq 0.7$.

The z is the molar ratio of Co on the $LiM'O_2$ layer, and may be $0\leq z\leq 0.1$, $0\leq z\leq 0.08$, or $0\leq z\leq 0.05$. When z is greater than 0.1, generation of gas and deterioration of the positive electrode active material may become intensified, and the life characteristics may deteriorate.

The w is the molar ratio of the doping element M on the $LiM'O_2$ layer, and may be $0\leq w\leq 0.2$, $0\leq w\leq 0.1$, or $0\leq w\leq 0.05$.

On the other hand, the positive electrode active material according to the present disclosure may further include a coating layer on the surface of the lithium-rich manganese-based oxide, if necessary. When the positive electrode active material includes a coating layer, contact between the lithium-rich manganese-based oxide and the electrolyte is suppressed by the coating layer, and side reactions of the electrolyte are reduced, thereby capable of obtaining the effect of improving life characteristics

The coating layer may include a coating element $M^1$, and the coating element $M^1$ may be, for example, at least one selected from the group consisting of Al, B, Co, W, Mg, V, Ti, Zn, Ga, In, Ru, Nb, Sn, Sr and Zr, preferably, Al, Co, Nb, W, and a combination thereof, and more preferably, Al, Co, and a combination thereof. The coating element $M^1$ may include two or more types, for example, Al and Co.

The coating element may be present in the coating layer, in oxide form, i.e., $M^1Oz$ ($1\leq z\leq 4$).

The coating layer can be formed through methods such as dry coating, wet coating, chemical vapor deposition(CVD), physical vapor deposition(PVD), and atomic layer deposition(ALD). Among these, it is preferable to form it through atomic layer deposition in that the coating layer can be formed to have a wider area.

The formation area of the coating layer may be 10 to 100%, preferably 30 to 100%, and more preferably 50 to 100%, based on the total surface area of the lithium-rich manganese-based oxide particles When the formation area of the coating layer satisfies the above range, the effect of improving life characteristics is excellent.

On the other hand, the positive electrode active material according to the present disclosure may be in the form of secondary particles in which a plurality of primary particles are agglomerated, and the average particle size $D_{50}$ of the secondary particles may be 2 $\mu$m to 10 $\mu$m, preferably 2 $\mu$m to 8 $\mu$m, and more preferably 4 $\mu$m to 8 $\mu$m. When the $D_{50}$ of the positive electrode active material satisfies the above range, the electrode density can be excellently achieved, and degradation of capacity and rate characteristics can be minimized.

Further, the positive electrode active material may have a BET specific surface area of $1m^2/g \sim 10m^2/g$, $3 \sim 8m^2/g$ or $4 \sim 6m^2/g$. If the BET specific surface area of the positive electrode active material is too low, the reaction area with the electrolyte is insufficient, which makes it difficult to achieve sufficient capacity. If the specific surface area is too high, moisture absorption is rapid and side reactions with electrolytes are accelerated, which makes it difficult to secure life characteristics.

On the other hand, the lithium-rich manganese-based oxide can be produced by mixing a transition metal precursor and a lithium raw material and then firing the mixture.

As the lithium raw material, for example, lithium-containing carbonates (e.g., lithium carbonate, etc.), hydrates (e.g., lithium hydroxide hydrate($LiOH \cdot H_2O$), etc.), hydroxides (e.g., lithium hydroxide, etc.), nitrates (e.g., lithium nitrate($LiNO_3$), etc.), chlorides (e.g., lithium chloride(LiCl), etc.), and the like can be used, and among these, one type alone or a mixture of two or more types can be used.

On the other hand, the transition metal precursor may be in the form of hydroxides, oxides, or carbonates. When the carbonate form of the precursor is used, it is more preferable in that a positive electrode active material with a relatively high specific surface area can be produced.

The transition metal precursor can be prepared by a co-precipitation process. For example, the transition metal precursor can be prepared by dissolving each transition metal-containing raw material in a solvent to prepare a metal solution, then mixing the metal solution, an ammonium cation complex forming agent, and a basic compound, and proceeding with a coprecipitation reaction. Further, if necessary, an oxidizing agent or oxygen gas may be further added during the coprecipitation reaction.

At this time, the transition metal-containing raw material may be acetate, carbonate, nitrate, sulfate, halide, sulfide, and the like of each transition metal. Specifically, the transition metal-containing raw material may be NiO, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, $Mn_2O_3$, $MnO_2$, $Mn_3O_4$ $MnCO_3$, $Mn(NO_3)_2$, $MnSO_4 \cdot H_2O$, manganese acetate, manganese halide, and the like.

The ammonium cation complex forming agent may be at least one selected from the group consisting of $NH_4OH$, $(NH_4)_2SO_4$, $NH_4NO_3$, $NH_4Cl$, $CH_3COONH_4$, and $NH_4CO_3$.

The basic compound may be at least one selected from the group consisting of NaOH, $Na_2CO_3$, KOH, and $Ca(OH)_2$. The form of the precursor may vary depending on the type of the basic compound used. For example, when NaOH is used as a basic compound, a hydroxide form of the precursor can be obtained, and when $Na_2CO_3$ is used as a basic compound, a carbonate form of the precursor can be obtained. Further, when a basic compound and an oxidizing agent are used together, an oxide form of the precursor can be obtained.

On the other hand, the transition metal precursor and the lithium raw material can be mixed in an amount such that the molar ratio of total transition metals (Ni+Co+Mn):Li is 1:1.05 ~ 1:2, preferably 1:1.1 ~ 1:1.8, and more preferably 1:1.25 ~ 1:1.8.

On the other hand, the firing may be performed at a temperature of 600°C to 1000°C or 700°C to 950°C, and the firing time may be 5 hours to 30 hours or 5 hours to 20 hours. Further, the firing atmosphere may be an air atmosphere or an oxygen atmosphere, for example, an atmosphere containing oxygen at 20 to 100% by volume.

On the other hand, the positive electrode active material layer may further include a conductive material and a binder in addition to the positive electrode active material.

Examples of the conductive material include spherical or flaky graphite; carbon-based material such as carbon black, acetylene black, ketjen black, channel black, furnace black, lamp black, thermal black, carbon fiber, single-wall carbon nanotubes, and multi-wall carbon nanotubes; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and the like. Among these, one type alone or a mixture of two or more types can be used. The conductive material can be contained in an amount of 0.1 ~ 20% by weight, 1 ~ 20% by weight, or 1 ~ 10% by weight based on the total weight of the positive electrode active material layer.

Further, the binder is a component that assists in adhesion between the positive electrode active materials and in an adhesive force between the positive electrode active material and the current collector, and examples thereof include a fluororesin binder including polyvinylidene fluoride(PVDF) or polytetrafluoroethylene(PTFE); a rubber-based binder including styrene-butadiene rubber (SBR), acrylonitrile-butadiene rubber, and styrene-isoprene rubber; a cellulose-based binder including carboxymethylcellulose(CMC), starch, hydroxypropylcellulose, and regenerated cellulose; a polyalcohol-based binder including polyvinyl alcohol; a polyolefin-based binders including polyethylene and polypropylene; a polyimide-based binder; a polyester-based binder; a silane-based binder, and the like. The binder may be contained in an amount of 1 ~ 20% by weight, 2 ~ 20% by weight, or 2 ~ 10% by weight based on the total weight of the

positive electrode active material layer.

## Negative electrode

The negative electrode may include, for example, a negative electrode current collector and a negative electrode active material layer located on the negative electrode current collector. The negative electrode active material layer may optionally include a binder and a conductive material along with the negative electrode active material.

The negative electrode current collector is not particularly limited as long as it has high conductivity without causing a chemical change in the battery, and, for example, copper, stainless steel, aluminum, nickel, titanium, fired carbon, or copper or stainless steel of which surface is treated with carbon, nickel, titanium, silver, or the like, an aluminum-cadmium alloy, or the like may be used. Further, the negative electrode current collector may generally have a thickness of 3 $\mu$m to 500 $\mu$m. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

As the negative electrode active material, a compound capable of reversible intercalation and deintercalation of lithium can be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_\beta$ ($0<\beta < 2$), $SnO_2$, vanadium oxide, and lithium vanadium oxide; a composite containing the metallic compound and the carbonaceous material, such as Si-C composite or Sn-C composite, and any one alone or a mixture of two or more thereof can be used.

Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes.

The conductive material is used to impart conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, ketjen black, channel black, furnace black, lamp black, thermal black, carbon fiber, and carbon nanotube; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one type alone or a mixture of two or more types of them can be used. The conductive material may typically be contained in an amount of 1 to 30% by weight, preferably 1 to 20% by weight, and more preferably 1 to 10% by weight, based on the total weight of the negative electrode active material layer.

The binder performs the role of improving adhesion between negative electrode active material particles and an adhesive force between the negative electrode active material and the negative electrode current collector. Specific examples thereof include a fluororesin binder including polyvinylidene fluoride(PVDF) or polytetrafluoroethylene(PTFE); a rubber-based binder including styrene-butadiene rubber(SBR), acrylonitrile-butadiene rubber, and styrene-isoprene rubber; a cellulose-based binder including carboxymethylcellulose(CMC), starch, hydroxypropylcellulose, and regenerated cellulose; a polyalcohol-based binder including polyvinyl alcohol; a polyolefin-based binders including polyethylene and polypropylene; a polyimide-based binder; a polyester-based binder; a silane-based binder, and the like, and any one type alone or a mixture of two or more types of them can be used. The binder may be contained in an amount of 1 to 30% by weight, preferably 1 to 20% by weight, and more preferably 1 to 10% by weight, based on the total weight of the negative electrode active material layer.

The negative electrode active material layer may be prepared, for example, by coating a negative electrode slurry containing a negative electrode active material and optionally a binder and a conductive material onto a negative electrode current collector, and drying the coated slurry, or may be prepared by casting the negative electrode slurry on a separate support and then laminating a film peeled from the support on the current collector.

## Separator

The lithium secondary battery according to the present disclosure may further include a separator interposed between the positive electrode and the negative electrode. The separator separates the negative electrode and the positive electrode from each other, and provides a moving passage for lithium ions. The separator can be used without particular limitation as long as it is used as a separator in a typical lithium secondary battery. Particularly, it is preferable that

the separator has a low resistance against the ion migration of the electrolyte and has an excellent ability to impregnate the electrolyte. Specifically, the separator may be a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers thereof. Further, a typical porous nonwoven fabric, for example, a nonwoven fabric made of a glass fiber having a high melting point, a polyethylene terephthalate fiber or the like can be used. In addition, in order to secure heat resistance or mechanical strength, a coated separator containing a ceramic ingredient or a polymer material can be used, and may be optionally used as a single layer or multilayer structure.

## Electrolyte

The electrolyte used herein may include various electrolytes that can be used in lithium secondary batteries, such as an organic liquid electrolyte, an inorganic liquid electrolyte, a solid polymer electrolyte, a gel-type polymer electrolyte, a solid inorganic electrolyte, a melt-type inorganic electrolyte, or a combination thereof, and the type thereof is not particularly limited.

For example, the electrolyte may include an organic solvent and a lithium salt.

The organic solvent can be used without any particular limitation as long as it serves as a medium through which ions involved in the electrochemical reaction of the battery may migrate. Specific examples of the organic solvent may include an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate(DMC), diethyl carbonate(DEC), methylethylcarbonate(MEC), ethylmethyl carbonate(EMC), ethylene carbonate(EC), or propylene carbonate(PC); an alcohol-based solvent such as ethyl alcohol or isopropyl alcohol; nitriles such as R-CN (wherein R is a linear, branched or cyclic hydrocarbon group having 2 to 20 carbon atoms, and may include a double bond aromatic ring or ether bond); amides such as dimethylformamide; dioxolanes such as 1,3-dioxolane; sulfolane; or the like.

The lithium salt can be used without any particular limitation as long as it is a compound capable of providing lithium ions used in the lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt that can be used herein may be $LiPF_6$, $LiN(FSO_2)_2$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$ or the like. The concentration of the lithium salt may be preferably used within the range of 0.1 to 5.0M.

Further, in order to improve the life characteristics of the battery, suppress the decrease of the battery capacity, improve the discharge capacity of the battery, etc., the electrolyte may further include an additive, in addition to the above electrolyte ingredients. For example, the additive may be at least one selected from vinylene carbonate, vinyl ethylene carbonate, fluoroethylene carbonate (FEC), ethylene sulfate (Esa), trimethylene sulfate (TMS), methyltrimethylene sulfate (MTMS), 1,3-propanesultone (1,3-PS), 1,3-propenesultone, 1,4-butane sultone, lithium oxalyldifluoroborate (LiODFB), lithium bisoxalatoborate (LiBOB), fluorobenzene, triethanolamine, ethylenediamine, tetravinylsilane, lithium difluorophosphate ($LiPO_2F_2$, LiDFP) and $LiBF_4$, but are not limited thereto. The additive may be contained in an amount of 0.1 to 10% by weight, preferably 0.1 to 5% by weight, based on the total weight of the electrolyte.

On the other hand, the electrode assembly may be various forms of electrode assemblies well known in the art, for example, a jelly-roll type, a stacked type, a stacked and laminated type, or a stack and folding type electrode assembly, and the form thereof is not particularly limited.

The jelly-roll type electrode assembly can be produced by interposing a sheet-shaped separator between a sheet-shaped positive electrode and a sheet-shaped negative electrode and then winding it in one direction.

The stacked type electrode assembly can be produced by cutting a positive electrode, a separator and a negative electrode into a desired shape and then sequentially stacking the cut positive electrode/separator/ negative electrode.

The stacked and laminated type electrode assembly can be produced by a method of stacking a positive electrode, a separator and a negative electrode to produce a plurality of unit cells, stacking the plurality of unit cells with a separator interposed therebetween, and then laminating them through a method such as heating.

The stack and folding type electrode assembly can be produced by a method of stacking a positive electrode, a separator and a negative electrode to produce a plurality of unit cells, arranging the plurality of unit cells on one surface or both side surfaces of a long folding separator and then winding the folding separator.

On the other hand, as the battery case, various battery cases known in the art, for example, a cylindrical battery case, a prismatic battery case, or a pouch-type battery case, and the like can be used, and the type thereof is not particularly limited.

**(2) Activating step**

Next, a step of charging and discharging the battery cell at least one or more times to electrically activate the battery is performed. The activating step is a step of charging and discharging the battery cell to impart electrical properties and forming a SEI (Solid Electrolyte Interphase) film on the electrodes to stabilize the battery.

Specifically, as the charging voltage is higher, the charging time and the charging depth (capacity) are greater and the degree of reaction of $Li_2MnO_3$ during activation increases, thereby increasing the amount of activation gas (oxidizing gas). Thus, in the present disclosure, the charge end point is adjusted in the activation charging step to adjust the degree of activation of the $Li_2MnO_3$ (monoclinic) phase, thereby suppressing the generation of gases such as oxidizing gas.

Meanwhile, the activation charging step may include a first charging step of charging at SOC 5 or less.

Specifically, the first charging step may be performed from SOC 0 to SOC 5 at a C-rate of 0.1C to 0.3C.

When the charging rate in the first charging satisfies the above range, the charge rate can be kept lower at the initial stage of SEI film formation, so that a more strong and dense SEI film may be formed, and a strong and dense SEI film is formed on the electrode surface, thereby realizing excellent life characteristics. When the current rate in the first charging step is faster than 0.3C, the SEI film may be formed unstably on the electrode surface. When the SEI film is formed unstably on the electrode surface, the SEI film is easily decomposed during battery operation to cause rapid deterioration of the electrode, which can result in a significant decrease in life characteristics.

Meanwhile, the first charging step may be performed in a constant current mode (CC mode).

In addition, the method of the present disclosure may include a second charging step of ending the charging when a ratio (Y/X) of the charge capacity (mAh/g) (Y) of a secondary battery to the estimated capacity (mAh/g) (X) of a positive electrode active material at a point where all lithium ions contained in the lithium-rich manganese-based oxide form a Li/Li dumbbell structure during activating charge corresponds to $1.10 < Y/X \leq 1.13$, specifically, when the ratio corresponds to $1.11 \leqq Y/X \leqq 1.12$.

FIG. 4 is a diagram for explaining the structural changes of the lithium-rich manganese-based oxide depending on the progress of charging in the activating step. Referring to FIG. 4, in the case of lithium-rich manganese-based oxide represented by Chemical Formula 1, nickel begins to be oxidized first in the initial second charging step, and then lithium ions contained in the lattice formed by the oxygen elements of the first MO layer (metal oxide layer), the second MO layer, and the third MO layer adjacent to each other move from the octahedral position to the tetrahydral position between the first MO layer and the second MO layer and the tetrahydral position between the second MO layer and the third MO layer, so that some lithium ions begin to form a dumbbell Li/Li structure within Mn honeycomb pattern. At this time, a first flattening section (plateau) may appear near 3.X V. In addition, a second flattening section appears (point (2) in FIG. 4) from the 4.4V point where all nickel is oxidized during charging (point (1) in FIG. 4) to a point where all lithium ions exist in the Only Li/Li dumbbell structure, that is, a point where all lithium ions move to the tetrahydral position between the first MO layer and the second MO layer and the tetrahydral position between the second MO layer and the third MO layer as shown in FIG. 5, so that the lithium ion concentration at the MO layer cross section and the octahedral position becomes 0, and all lithium ions existing at the tetrahydral positions exist as Li/Li dumbbell (referred to as 'Only Li/Li dumbbell point', see FIG. 2(b) of 'Electrochemistry Communications 6 (2004) 1045-1050'). Meanwhile, during the progress of high voltage charging of 4.4V or more, in-plane migration of transition metal ions occurs in earnest, and oxidizing gases such as $CO/CO_2$ containing oxygen gradually begin to evolve due to a side reaction between the electrolyte and lattice oxygen elements. That is, if activation charging continues even after all lithium ions exist in the Li/Li dumbbell structure, lithium ions are desorbed and removed from the Li/Li dumbbell structure, and the transition metal structure change in the positive electrode becomes rapidly intensified. Further, as bulk $O_2$ is formed due to the effect of vacancy clustering of the transition metal layer from which lithium is desorbed, the generation of oxidizing gases such as $CO/CO_2$ containing oxygen becomes intensified (point (3) in FIG. 4).

The method of the present disclosure includes a second charging step of ending the charging when a ratio (Y/X) of the charge capacity (mAh/g) (Y) of a secondary battery to the estimated capacity (mAh/g) (X) of a positive electrode active material at a point where all lithium ions contained in the lithium-rich manganese-based oxide form a Li/Li dumbbell structure corresponds to $1.10 < Y/X \leq 1.13$, thereby providing a method for suppressing and reducing the generation of oxidizing gas.

By ending the second charging step in a range where the ratio (Y/X) of the charge capacity(Y) of the secondary battery to the estimated capacity (X) of the positive electrode active material is greater than 1.10, the amount of lithium that can utilize through the O/Mn-redox reaction can be increased, and sufficient charge capacity can be secured. In addition, by ending the second charging step in a range where the ratio (Y/X) of the charge capacity(Y) of the secondary battery to the estimated capacity (X) of the positive electrode active material is 1.13 or less, excessive charging can be prevented, thereby reducing the generation of oxidizing gas, minimizing rapid phase transition changes within the positive electrode, and obtaining the effect of improving the initial resistance of the cell. In particular, by ending the second charging step when the ratio (Y/X) of the charging capacity(Y) of the secondary battery to the estimated capacity (X) of the positive electrode active material is 1.13, sufficient activation process can be performed up to the vicinity of the Only Li/Li dumbbell point,

which prevents the additional activation process from reoccurring again during the subsequent battery charge/discharge process, and can prevent generation of gas during the subsequent charge/discharge process.

Meanwhile, the estimated capacity (C) (mAh/g) of the positive electrode active material can be estimated and calculated by a calculation formula as shown in the following Equation 1.

[Equation 1]

$$C\ (mAh/g) = Q \times (i/100)$$

in Equation 1,

Q is the theoretical capacity (mAh/g) of lithium-rich manganese-based oxide, and
i is the percentage (%) of the molar ratio of lithium ions moved until only lithium ions forming a Li/Li dumbbell structure exist, to the total molar ratio of lithium ions contained in lithium-rich manganese-based oxide.

Specifically, the theoretical capacity of the lithium-rich manganese-based oxide can be defined by a conventional mathematical formula as shown in the following Equation 3.

[Equation 3]

$$Q\left(\frac{mAh}{g}\right) = \left[\frac{\text{Li atomic fraction} \times F\left(\frac{C}{mol{\cdot}e^-}\right)}{3600\left(\frac{C}{Ah}\right) \times MW\left(\frac{g}{mol}\right)}\right] \times \frac{1000\ mAh}{1\ Ah}$$

in Equation 3,

F is Faraday constant, which is 96485.3321 (C/mole·$e^-$), and
MW is the weight average molecular weight (g/mol) of the lithium-rich manganese-based oxide.

In the above Equation, 3600 C (Coulomb) is a constant that defines the amount of charge (Ah) that moves when a current of 1 Ampere (A) flows for 1 hour (h).

Meanwhile, the i can be defined by the following Equation 2.

[Equation 2]

$$i(\%) = \left\{1 - \frac{(2 \times |Li\ molar\ ratio - 1|)}{Li\ molar\ ratio}\right\} \times 100(\%)$$

in Equation 2,
Li molar ratio is the total molar ratio of lithium contained in the lithium-rich manganese-based oxide.

Specifically, the Li molar ratio means 'a' in the lithium-rich manganese-based oxide represented by Chemical Formula 1 ($Li_aNi_bCo_cMn_dM_eO_2$). For example, in the lithium-rich manganese-based oxide which is $Li_{1.16}Ni_{0.305}Co_{0.004}Mn_{0.531}O_2$, the Li molar ratio may be defined as 1.16. In this case, i is 72.5%, and the ratio of the number of moles of lithium to the number of moles of all metals excluding lithium (Li/Me) may be 1.38.

Meanwhile, the charge capacity(Y) of the secondary battery may be a measured capacity obtained by visually real-time monitoring the display of the detector during charging of the battery cell.

Meanwhile, the second charging step may be performed at a C-rate of 0.3C to 1.0C, and may be performed in two or more steps with different C-rates, if necessary. For example, the second charging step may include a 2-1 charging step of charging the battery-cell at a C-rate of 0.5C to 1.0C, and a 2-2 charging step of charging the battery-cell at a C-rate that is lower than the C-rate of the 2-1 charging step. At this time, the 2-1 charging step may be performed until reaching SOC 60, and the 2-2 charging step may be performed from SOC 60 to the point in which a ratio (Y/X) of the charge capacity(mAh/g) (Y) of the secondary battery to the estimated capacity (mAh/g) (X) of the positive electrode active material at a point where all lithium ions contained in the lithium-rich manganese-based oxide form a Li/Li dumbbell structure corresponds to 1.10 <

$Y/X \leq 1.13$. When the second charging step is performed in two steps as above, the activation charging time can be effectively shortened.

Meanwhile, the end voltage of charge of the second charging stage may be 4.5V to 4.6V, specifically 4.55V to 4.6V.

The second charging step may be performed in a constant current mode (CC mode) or a constant current-constant voltage mode (CCCV mode).

When the second charging step is performed in a constant current-constant voltage mode (CCCV mode), the CC charging is performed until the end voltage of charge is reached, and when the end voltage of charge is reached, the CV charging may be performed in which the charging C-rate is sequentially decreased to about 0.05C to 0.15C.

Next, the activating step discharges the battery-cell charged through the first charging step and the second charging step. At this time, the discharge may be performed at a C-rate of 0.3C to 0.7C When the discharge rate satisfies the above range, the activation time can be appropriately controlled and discharge capacity characteristics within a desired range can be achieved.

Meanwhile, the discharge may be performed in a constant current mode (CC mode).

Meanwhile, the end voltage of discharge may be 2.0V~3.0V, specifically 2.0V.

Meanwhile, the activating step is preferably performed under temperature conditions of 25°C to 70°C, more preferably 40°C to 50°C. When the activating step is performed in the above temperature range, the effect of realizing high capacity can be obtained through appropriate activation of $Li_2MnO_3$.

Further, the activating step may be performed under pressurized conditions, if necessary. The pressurization can be performed by mounting the battery-cell to a jig and then applying pressure to the battery-cell via the jig. When the activating step is performed under pressurized conditions, it has the advantage that gas generated during the activating step can be easily discharged.

Meanwhile, although this is not essentially required, the activating step may further include an aging step, if necessary. The aging step allows the electrolyte to be uniformly impregnated into the electrode assembly and stabilizes the battery, and may be performed before charging, during charging, and/or after discharging, and may be performed one or more times.

The aging step may be performed at a temperature of, for example, 20°C to 60°C, 20°C to 50°C, and preferably 30°C to 50°C. When the aging is performed at the above temperature, electrolyte impregnability and lithium mobility are improved so that activation can be performed more smoothly.

**<Lithium secondary battery>**

Further, the present disclosure includes a lithium secondary battery manufactured according to the method for manufacturing a lithium secondary battery.

The lithium secondary battery includes a positive electrode, a negative electrode, a separator, and an electrolyte, wherein the positive electrode includes lithium-rich manganese-based oxide in which the content of manganese in all metals excluding lithium is greater than 50 mol%, and a ratio of the number of moles of lithium to the number of moles of all metals excluding lithium (Li/Me) is greater than 1.

Hereinafter, the present disclosure will be described in more detail with reference to specific examples.

**[EXAMPLE]**

**Example 1**

**(Manufacture of battery cells)**

A positive electrode active material: a conductive material: a PVDF binder were mixed at a weight ratio of 97 : 1 : 2 in N-methylpyrrolidone to prepare a positive electrode slurry. At this time, $Li_{1.38}[Ni_{0.363}Co_{0.005}Mn_{0.632}]O_2$ (Li/Me=1.38) was used as the positive electrode active material, and carbon nanotube(CNT) was used as the conductive material. The positive electrode slurry was coated onto an aluminum current collector sheet, dried, and then rolled to manufacture a positive electrode.

A negative electrode active material: a conductive material: a binder were mixed at a weight ratio of 96:1:3 in water to prepare a negative electrode slurry. At this time, graphite was used as the negative electrode active material, a carbon black was used as a conductive material, and SBR and CMC were mixed and used at a weight ratio of 2:1 as the binder. The negative electrode slurry was coated onto a copper current collector sheet, dried, and then rolled to manufacture a negative electrode.

A separator was interposed between the positive electrode and the negative electrode manufactured as above to produce an electrode assembly, and the electrode assembly was inserted into a battery case, and then an electrolyte was

injected therein, thereby manufacturing a battery cell.

**(Activating step)**

The battery cells were pre-aged for 2 days, then first charged up to SOC 3 in 0.2C constant current mode at a temperature of 45°C, second charged under 0.33C constant current-constant voltage mode (0.05C CV cut-off) until the charge capacity(Y) of the secondary battery reached 287 mAh/g (end voltage of charge: 4.5V), and then discharged up to 2.0V at a constant current of 0.5C. The activating step was performed in this manner to manufacture a lithium secondary battery.

The charging step can be performed by connecting the manufactured cell to a charger/discharger and visually checking the continuously changing charge capacity value during charging through the display of the detector. When the desired secondary battery charge capacity was obtained, charging was ended. Meanwhile, the ratio (Y/X) of the charge capacity(mAh/g) (Y) of the secondary battery to the estimated capacity(mAh/g) (X) of the positive electrode active material at the point where all lithium ions contained in the lithium-rich manganese-based oxide form a Li/Li dumbbell structure is as shown in Table 1 below.

**Example 2.**

The battery cells manufactured in Example 1 were pre-aged for 2 days, then first charged up to SOC 3 under 0.2C constant current mode at a temperature of 45°C, charged up to SOC 60 at a constant current of 1.0C, second charged under 0.4C constant current-constant voltage mode (0.15C CV cut-off) until the charge capacity(Y) of the secondary battery reached 290 mAh/g (end voltage of charge: 4.6V), and then discharged up to 2.0V at a constant current of 0.5C. The activating step was performed in this manner to manufacture a lithium secondary battery..

Meanwhile, the ratio (Y/X) of the charge capacity(mAh/g) (Y) of the secondary battery to the estimated capacity(mAh/g) (X) of the positive electrode active material at the point where all lithium ions contained in the lithium-rich manganese-based oxide form a Li/Li dumbbell structure is as shown in Table 1 below.

**Comparative Example 1**

The battery cells manufactured in Example 1 were pre-aged for 2 days, then first charged up to SOC 3 under 0.2C constant current mode at a temperature of 45°C, second charged under 0.33C constant current-constant voltage mode (0.05C CV cut-off) until the charge capacity(Y) of the secondary battery reached 297 mAh/g (end voltage of charge: 4.6V), and then discharged up to 2.0V at a constant current of 0.5C. The activating step was performed in this manner to manufacture a lithium secondary battery.

Meanwhile, the ratio (Y/X) of the charge capacity(mAh/g) (Y) of the secondary battery to the estimated capacity(mAh/g) (X) of the positive electrode active material at the point where all lithium ions contained in the lithium-rich manganese-based oxide form a Li/Li dumbbell structure is as shown in Table 1 below.

**Comparative Example 2**

The battery cells manufactured in Example 1 were pre-aged for 2 days, then first charged up to SOC 3 under 0.2C constant current mode at a temperature of 45°C, charged up to SOC 60 at a constant current of 0.33C, second charged under 0.1C constant current-constant voltage mode (0.05C CV cut-off) until the charge capacity(Y) of the secondary battery reached 293 mAh/g (end voltage of charge: 4.6V), and then discharged up to 2.0V at a constant current of 0.5C. The activating step was performed in this manner to manufacture a lithium secondary battery.

Meanwhile, the ratio (Y/X) of the charge capacity(mAh/g) (Y) of the secondary battery to the estimated capacity(mAh/g) (X) of the positive electrode active material at the point where all lithium ions contained in the lithium-rich manganese-based oxide form a Li/Li dumbbell structure is as shown in Table 1 below.

**Comparative Example 3**

The battery cells manufactured in Example 1 were pre-aged for 2 days, then first charged up to SOC 3 under 0.2C constant current mode at a temperature of 45°C, charged up to SOC 60 at a constant current of 1.0C, second charged at a constant current of 0.4C until the charge capacity(Y) of the secondary battery reached 278 mAh/g (end voltage of charge: 4.6V), and then discharged up to 2.0V at a constant current of 0.5C. The activating step was performed in this manner to manufacture a lithium secondary battery.

Meanwhile, the ratio (Y/X) of the charge capacity(mAh/g) (Y) of the secondary battery to the estimated capacity(mAh/g) (X) of the positive electrode active material at the point where all lithium ions contained in the

lithium-rich manganese-based oxide form a Li/Li dumbbell structure is as shown in Table 1 below.

**Comparative Example 4**

The battery cells manufactured in Example 1 were pre-aged for 2 days, then first charged up to SOC 3 under 0.2C constant current mode at a temperature of 45°C, second charged at a constant current of 0.1C until the charge capacity(Y) of the secondary battery reached 244 mAh/g (end voltage of charge: 4.6V), and then discharged up to 2.0V at a constant current of 0.5C. The activating step was performed in this manner to manufacture a lithium secondary battery.

Meanwhile, the ratio (Y/X) of the charge capacity(mAh/g) (Y) of the secondary battery to the estimated capacity(mAh/g) (X) of the positive electrode active material at the point where all lithium ions contained in the lithium-rich manganese-based oxide form a Li/Li dumbbell structure is as shown in Table 1 below.

**Comparative Example 5**

The battery cells manufactured in Example 1 were pre-aged for 2 days, then first charged up to SOC 3 under 0.2C constant current mode at a temperature of 45°C, charged up to SOC 60 at a constant current of 1.0C, second charged under 0.1C constant current-constant voltage mode (0.05C CV cut-off) until the charge capacity(Y) of the secondary battery reached 305 mAh/g (end voltage of charge: 4.6V), and then discharged up to 2.0V at a constant current of 0.5C. The activating step was performed in this manner to manufacture a lithium secondary battery.

**Example 3**

The battery cells were manufactured in the same manner as in Example 1, except that $Li_{1.34}[Ni_{0.354}Mn_{0.646}O_2$ (Li/Me=1.34) was used as a positive electrode active material.

The manufactured battery cells were pre-aged for 2 days, then first charged up to SOC 3 under 0.2C constant current mode at a temperature of 45°C, second charged under 0.33C constant current-constant voltage mode (0.05C CV cut-off) until the charge capacity(Y) of the secondary battery reached 286 mAh/g (end voltage of charge: 4.6V), and then discharged up to 2.0V at a constant current of 0.5C. The activating step was performed in this manner to manufacture a lithium secondary battery.

Meanwhile, the ratio (Y/X) of the charge capacity(mAh/g) (Y) of the secondary battery to the estimated capacity(mAh/g) (X) of the positive electrode active material at the point where all lithium ions contained in the lithium-rich manganese-based oxide form a Li/Li dumbbell structure is as shown in Table 1 below.

[Table 1]

| | Charge capacity of secondary battery (mAh/g) (Y) | Estimated capacity of positive electrode active material (mAh/g)(X) | Y/X ratio |
|---|---|---|---|
| Example 1 | 287 | 258 | 1.11 |
| Example 2 | 290 | | 1.12 |
| Comparative Example 1 | 297 | | 1.15 |
| Comparative Example 2 | 293 | | 1.14 |
| Comparative Example 3 | 278 | | 1.08 |
| Comparative Example 4 | 244 | | 0.95 |
| Comparative Example 5 | 305 | | 1.18 |
| Example 3 | 286 | 260 | 1.10 |

**[EXPERIMENTAL EXAMPLE]**

**Experimental Example 1.**

The amount of gas generated during the activating step of the lithium secondary batteries manufactured in Examples 1 to 3 and the secondary batteries manufactured in Comparative Examples 1 to 5 was measured, and the results are shown in Table 2 and FIG. 1 below.

[Table 2]

| | Amount of CO + $CO_2$ gas ($\mu\ell$) | Amount of $O_2$ gas ($\mu\ell$) |
|---|---|---|
| Example 1 | 3950 | 188 |
| Example 2 | 3515 | 172 |
| Comparative Example 1 | 6610 | 9275 |
| Comparative Example 2 | 5270 | 1645 |
| Comparative Example 3 | 3140 | 0 |
| Comparative Example 4 | 1755 | 0 |
| Comparative Example 5 | 6325 | 2105 |
| Example 3 | 4865 | 0 |

Referring to Table 2 and FIG. 1, it can be seen that in the case of the lithium secondary batteries of Examples 1 and 2, and Example 3, the total amount of oxidizing gas generated, including oxygen gas, etc., has decreased as compared to the lithium secondary batteries of Comparative Examples 1, 2 and 5. That is, in the case of the lithium secondary batteries of Comparative Examples 1, 2, and 5 in which the ratio (Y/X) of the charge capacity(mAh/g) (Y) of the secondary battery to the estimated capacity(mAh/g) (X) of the positive electrode active material at the point where all lithium ions contained in the lithium-rich manganese-based oxide form a Li/Li dumbbell structure was greater than 1.13, it can be confirmed that the total amount of gas generated increased depending on the intensification of the lithium desorption and transition metal structural changes in the positive electrode.

Meanwhile, in the case of the lithium secondary batteries of Comparative Examples 3 and 4, it appears that the total amount of gas generated, including oxygen gas, has decreased as compared to the lithium secondary batteries of Examples 1, 2, and 3, but this is considered to be a phenomenon caused by not sufficiently performing an activation process. The specific reason can be explained through the capacity retention evaluation results of Experimental Example 3 below.

**Experimental Example 2. Evaluation of initial resistance**

The lithium secondary batteries manufactured in Examples 1, 2, and Example 3 and the secondary batteries manufactured in Comparative Examples 1 to 5 were charged under CC-CV (constant current-constant voltage) conditions up to 4.35V at a rate of 0.33C at 45°C, and discharged under CC conditions up to 2.0V at a rate of 0.33C. The charge and discharge was made to 1 cycle, and 2 cycles of initial charge and discharge were performed.

The SOC (state of charge) was adjusted to 50% based on the discharge capacity of the second charge and discharge. The DC internal resistance was calculated through the voltage drop that occurred when a discharge pulse was applied at 2.5C at SOC 50% for 10 seconds, and the resistance at this time was set as the initial resistance, which is shown in FIG. 2 below.

Referring to FIG. 2, it can be seen that the initial resistance of the lithium secondary batteries of Examples 1, 2, and 3 was improved as compared to the lithium secondary batteries of Comparative Examples 1, 2, and 5.

Meanwhile, in the case of the lithium secondary batteries of Comparative Examples 3 and 4, the initial resistance was confirmed to be lower or similar to that of the lithium secondary batteries of Examples 1, 2, and 3, but this is considered to be a phenomenon caused by not sufficiently performing an activation process. The specific reason can be explained through the capacity retention evaluation results in Experimental Example 3 below.

**Experimental Example 3. Evaluation of capacity retention**

The lithium secondary batteries manufactured in Examples 1, 2, and Example 3 and the secondary batteries manufactured in Comparative Examples 3 and 4 were charged under CC-CV (constant current-constant voltage) conditions up to 4.35V at a rate of 0.33C at 25°C, and discharged under CC conditions up to 2.0V at a rate of 0.33C. The charge and discharge was made to 1 cycle, and 2 cycles of initial charge and discharge were performed. At this time, the discharge capacity of the second cycle was set as the initial discharge capacity.

Then, at high temperature (45°C), each lithium secondary battery was charged under CC-CV conditions up to 4.35V at a rate of 0.33C and discharged under CC conditions up to 2.0V at a rate of 0.33C. The charging and discharging was made to 1 cycle, and 50 cycles were performed.

The capacity retention was calculated by substituting the capacity after the first cycle and the capacity after the 50th cycle into the following Equation A, and the results are shown in FIG. 3.

Capacity retention (%) = (Discharge capacity after 50th cycle at high temperature / Discharge capacity after 1st cycle at high temperature) × 100 [Equation A]

Referring to FIG. 3, it can be confirmed that in the case of the lithium secondary batteries of Examples 1 to 3, since the activation process was performed sufficiently, a stable capacity retention can be achieved during high-temperature cycles.

On the other hand, it can be confirmed that in the case of the lithium secondary batteries of Comparative Examples 3 and 4, the capacity retention continuously increased during the high-temperature cycle process. That is, in the case of the lithium secondary batteries of Comparative Examples 3 and 4, since the activation process was not sufficiently performed at the previous activation process step, an additional activation process was induced during the subsequent cycle process, and an abnormal phenomenon occurred in which the capacity increased as the number of cycles increased.

**[Industrial Applicability]**

The method for manufacturing a lithium secondary battery according to the present disclosure can control the charge end point in the activating step, so that the ratio (Y/X) of the charge capacity(mAh/g) (Y) of the secondary battery to the estimated capacity(mAh/g) (X) of the positive electrode active material at the point where all lithium ions contained in the lithium-rich manganese-based oxide form a Li/Li dumbbell structure corresponds to $1.10 < Y/X \leq 1.13$, thereby significantly reducing the generation of gas induced in the activating step.

**Claims**

**1.** A method for manufacturing a lithium secondary battery, the method comprising the steps of:

preparing a battery cell including a positive electrode, a negative electrode and an electrolyte, wherein the positive electrode includes lithium-rich manganese-based oxide in which the content of manganese in all metals excluding lithium is greater than 50 mol%, and a ratio of the number of moles of lithium to the number of moles of all metals excluding lithium (Li/Me) is greater than 1; and
charging and discharging the battery cell at least one or more times to activate the battery,
wherein the activating step includes ending the charging when a ratio (Y/X) of the charge capacity(mAh/g) (Y) of a secondary battery to the estimated capacity(mAh/g) (X) of a positive electrode active material at a point where all lithium ions contained in the lithium-rich manganese-based oxide form a Li/Li dumbbell structure corresponds to $1.10 < Y/X \leq 1.13$.

**2.** The method for manufacturing a lithium secondary battery according to claim 1, wherein:

the lithium-rich manganese-based oxide is represented by the following Chemical Formula 1.

[Chemical Formula 1] $Li_aNi_bCo_cMn_dM_eO_2$

wherein, in Chemical Formula 1,
$1<a$, $0\leq b\leq 0.5$, $0\leq c\leq 0.1$, $0.5\leq d<1.0$, and $0\leq e\leq 0.2$, and
M is at least one selected from the group consisting of Al, B, Co, W, Mg, V, Ti, Zn, Ga, In, Ru, Nb, Sn, Sr and Zr.

**3.** The method for manufacturing a lithium secondary battery according to claim 2, wherein:
in Chemical Formula 1, $1.1\leq a\leq 1.5$, $0.1\leq b\leq 0.4$, $0\leq c\leq 0.05$, $0.5\leq d\leq 0.80$, and $0\leq e\leq 0.1$

**4.** The method for manufacturing a lithium secondary battery according to claim 1, wherein:

the estimated capacity(C) (mAh/g) of the positive electrode active material is calculated using the following Equation 1.

[Equation 1]

$$C\ (mAh/g) = Q \times (i/100)$$

in Equation 1,
Q is the theoretical capacity(mAh/g) of lithium-rich manganese-based oxide, and
i is the percentage (%) of the molar ratio of lithium ions moved until only lithium ions forming a Li/Li dumbbell structure exist, to the total molar ratio of lithium ions contained in lithium-rich manganese-based oxide.

**5.** The method for manufacturing a lithium secondary battery according to claim 4, wherein:

the i is defined by the following Equation 2:

[Equation 2]

$$i(\%) = \left\{1 - \frac{(2 \times |Li\ molar\ ratio\text{-}1|)}{Li\ molar\ ratio}\right\} \times 100(\%)$$

in Equation 2,
Li molar ratio is the total molar ratio of lithium ions contained in the lithium-rich manganese-based oxide.

**6.** The method for manufacturing a lithium secondary battery according to claim 1, wherein:
the charge capacity(Y) of the secondary battery is the capacity measured by real-time monitoring via the display of the detector during charging of the battery cell.

**7.** The method for manufacturing a lithium secondary battery according to claim 1, wherein:
the activating step includes charging from 4.5V to 4.6V at 0.3C to 1.0C.

**8.** The method for manufacturing a lithium secondary battery according to claim 1, wherein:
the charging step is performed in a constant current mode (CC mode) or a constant current-constant voltage mode (CCCV mode).

**9.** The method for manufacturing a lithium secondary battery according to claim 8, wherein:
the cut-off current at the constant voltage charging mode is 0.05C to 0.15C.

**10.** The method for manufacturing a lithium secondary battery according to claim 1, wherein:
the activating step further includes charging from SOC 0 to SOC 5 at a C-rate of 0.1C to 0.3C.

**11.** The method for manufacturing a lithium secondary battery according to claim 10, wherein:
the charging step is performed in a constant current mode (CC mode).

**12.** The method for manufacturing a lithium secondary battery according to claim 1, wherein:
the activating step includes discharging at a C-rate of 0.3C to 0.7C until reaching 2.0V.

【FIG. 1】

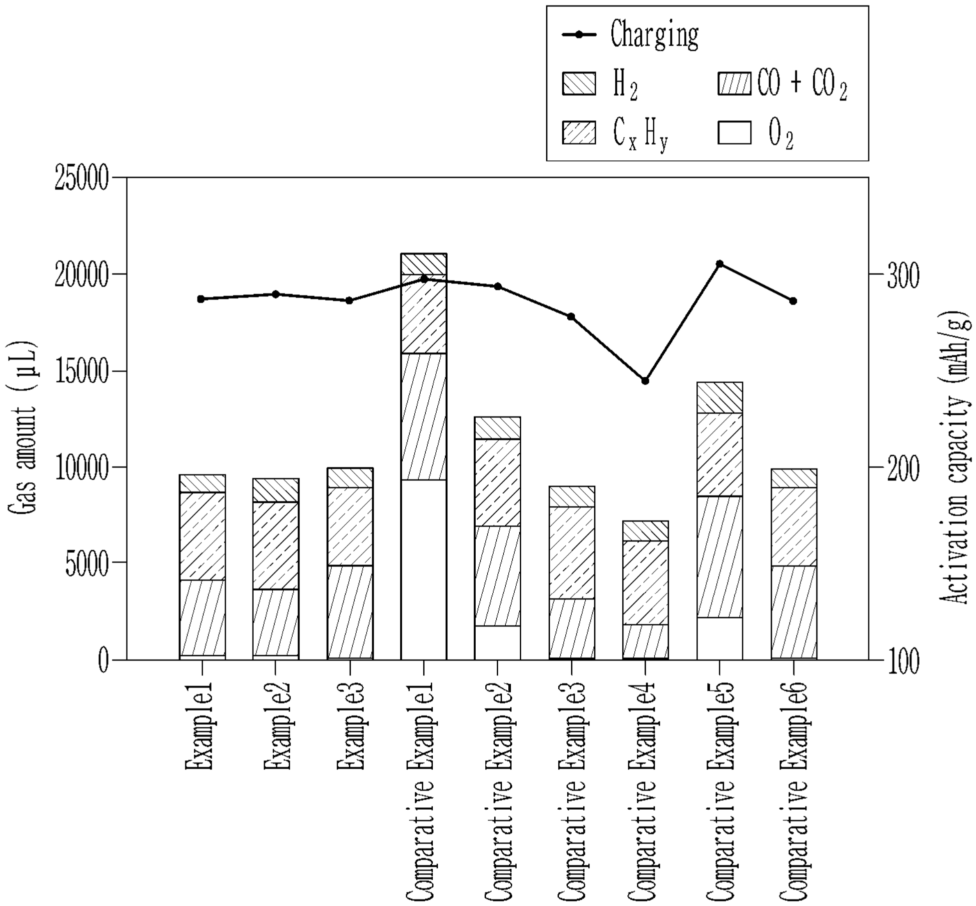
Charging
$H_2$
$CO + CO_2$
$C_xH_y$
$O_2$
25000
20000
15000
10000
5000
0
Gas amount (μL)
300
200
100
Activation capacity (mAh/g)
Example1
Example2
Example3
Comparative Example1
Comparative Example2
Comparative Example3
Comparative Example4
Comparative Example5
Comparative Example6

【FIG. 2】

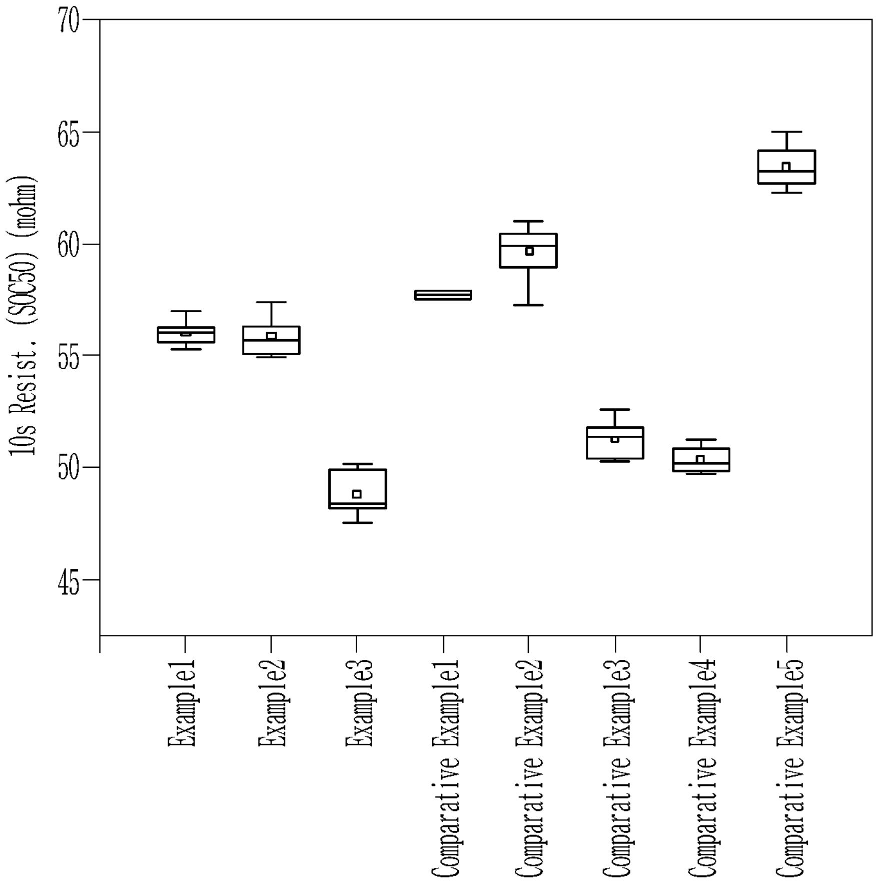
70
65
60
55
50
45
10s Resist. (SOC50) (mohm)
Example1
Example2
Example3
Comparative Example1
Comparative Example2
Comparative Example3
Comparative Example4
Comparative Example5

【FIG. 3】

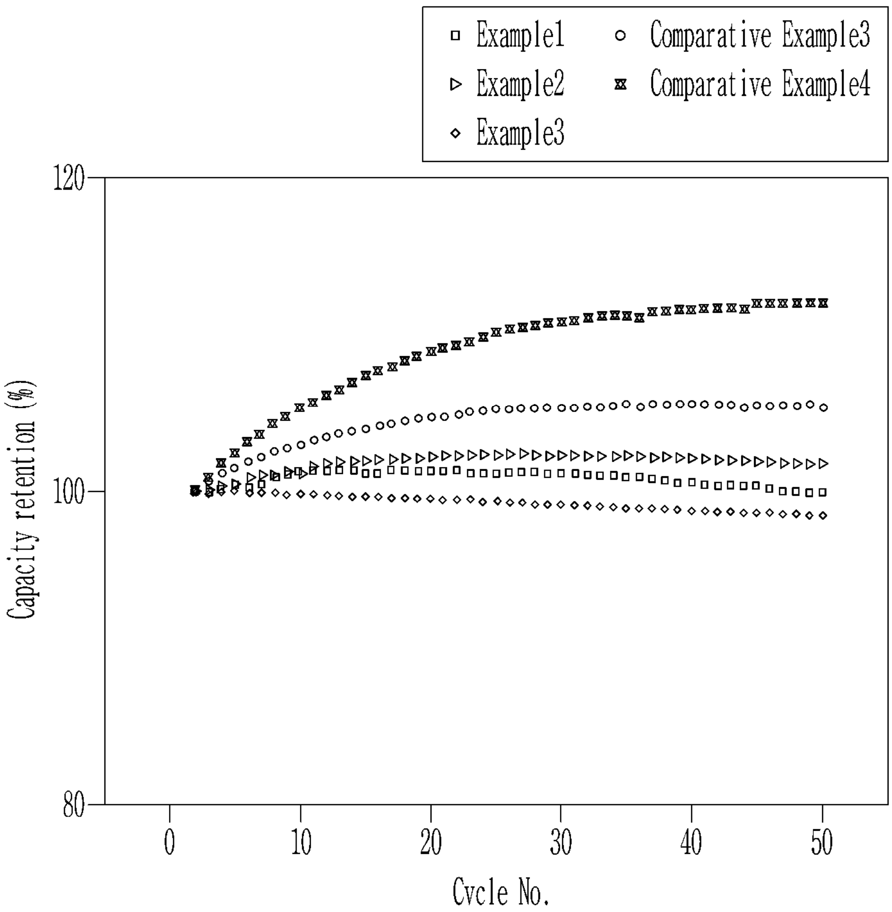
Example1
Example2
Example3
Comparative Example3
Comparative Example4
120
100
80
Capacity retention (%)
0
10
20
30
40
50
Cycle No.

【FIG. 4】

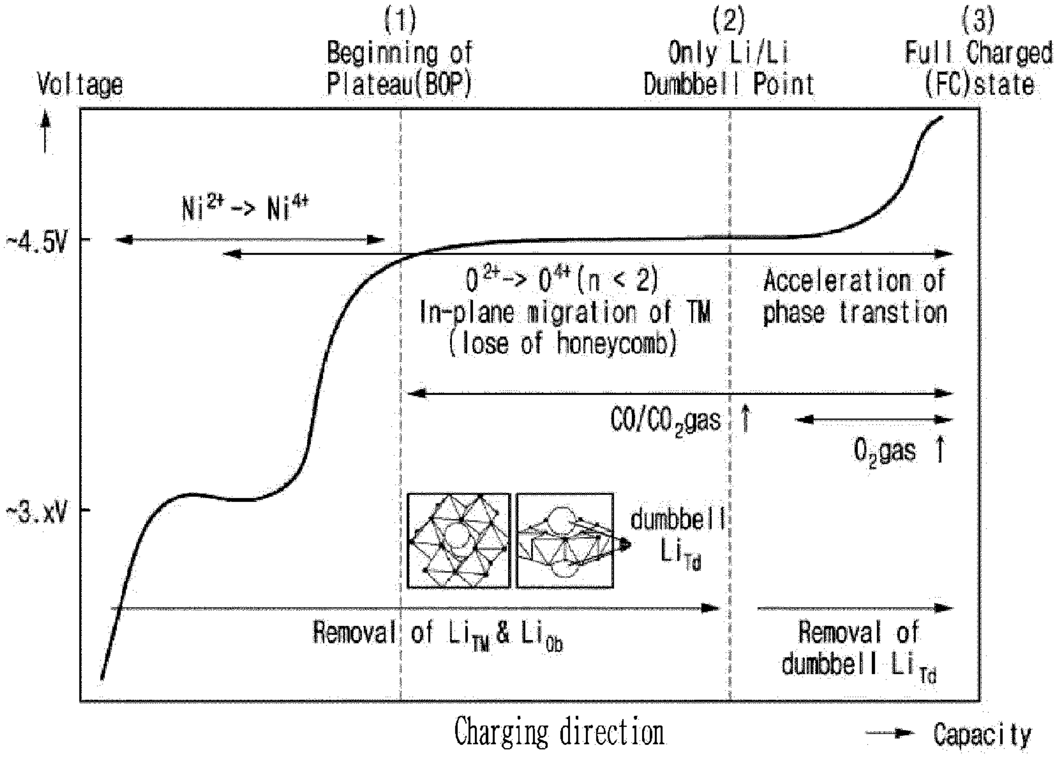
(1)
Beginning of
Plateau(BOP)
(2)
Only Li/Li
Dumbbell Point
(3)
Full Charged
(FC)state
Voltage
~4.5V
~3.xV
$Ni^{2+}$ -> $Ni^{4+}$
$O^{2-}$-> $O^{n-}$ (n < 2)
In-plane migration of TM
(lose of honeycomb)
Acceleration of
phase transtion
$CO/CO_2$gas ↑
$O_2$gas ↑
dumbbell
$Li_{Td}$
Removal of $Li_{TM}$ & $Li_{Ob}$
Removal of
dumbbell $Li_{Td}$
Charging direction
Capacity

【FIG. 5】

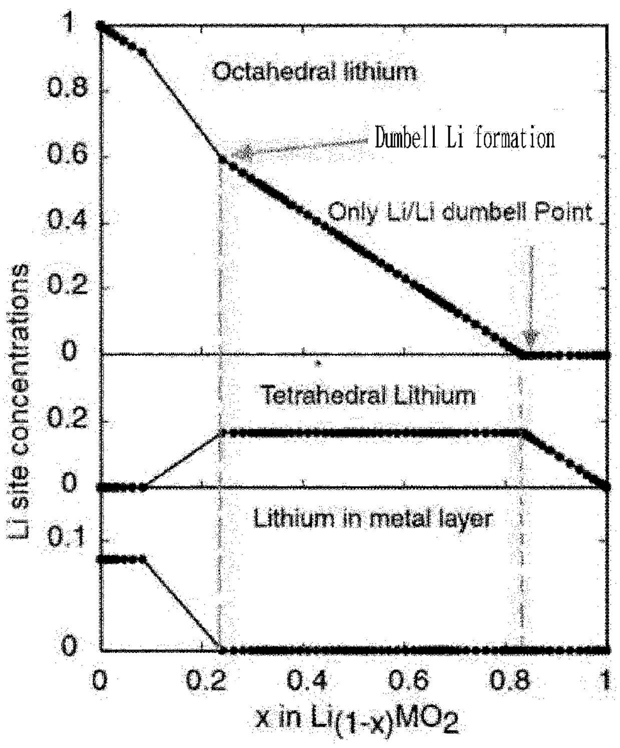
Octahedral lithium
Dumbell Li formation
Only Li/Li dumbell Point
Tetrahedral Lithium
Lithium in metal layer
Li site concentrations
x in $Li_{(1-x)}MO_2$
1
0.8
0.6
0.4
0.2
0
0.1
0.2
0.4
0.6
0.8

**INTERNATIONAL SEARCH REPORT**

International application No.
**PCT/KR2024/002381**

**A. CLASSIFICATION OF SUBJECT MATTER**

**H01M 10/058**(2010.01)i; **H01M 4/04**(2006.01)i; **H01M 4/505**(2010.01)i; **H01M 4/525**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/058(2010.01); C01G 53/00(2006.01); H01M 10/052(2010.01); H01M 10/44(2006.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 과리튬 망간계 산화물(perlithium manganese oxide), 활성화(activation), 양극 활물질(positive electrode active material), 추정 용량(estimated capacity), 이차전지(secondary battery), 충전 용량(charging capacity)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0113441 A (LG CHEM, LTD.) 08 October 2019 (2019-10-08)<br>See paragraphs [0118]-[0180] and claim 1. | 1-12 |
| A | KR 10-2021-0011583 A (L & F CO., LTD.) 02 February 2021 (2021-02-02)<br>See paragraphs [0023]-[0085] and claims 2-5. | 1-12 |
| A | KR 10-2091214 B1 (LG CHEM, LTD.) 19 March 2020 (2020-03-19)<br>See paragraphs [0013]-[0020] and claim 1. | 1-12 |
| A | JP 2018-087096 A (NATIONAL INSTITUTE OF ADVANCED INDUSTRIAL SCIENCE AND TECHNOLOGY et al.) 07 June 2018 (2018-06-07)<br>See paragraphs [0013]-[0062] and claims 5-9. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 May 2024** | **28 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/002381**

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0100242 A (KOREA UNIVERSITY RESEARCH AND BUSINESS FOUNDATION) 15 July 2022 (2022-07-15)<br>See paragraphs [0146]-[0152] and claim 8. | 1-12 |

Form PCT/ISA/210 (second sheet) (July 2022)

**INTERNATIONAL SEARCH REPORT**
**Information on patent family members**

International application No.
**PCT/KR2024/002381**

| Patent document cited in search report | Publication date (day/month/year) | Patent family member(s) | Publication date (day/month/year) |
|---|---|---|---|
| KR 10-2019-0113441 A | 08 October 2019 | KR 10-2439127 B1 | 02 September 2022 |
| KR 10-2021-0011583 A | 02 February 2021 | KR 10-2254848 B1 | 24 May 2021 |
| KR 10-2091214 B1 | 19 March 2020 | CN 108604675 A | 28 September 2018 |
| | | CN 108604675 B | 18 May 2021 |
| | | EP 3382780 A1 | 03 October 2018 |
| | | EP 3382780 B1 | 13 December 2023 |
| | | JP 2019-500735 A | 10 January 2019 |
| | | JP 6797426 B2 | 09 December 2020 |
| | | KR 10-2018-0029306 A | 21 March 2018 |
| | | US 11081695 B2 | 03 August 2021 |
| | | US 11611078 B2 | 21 March 2023 |
| | | US 2019-0027750 A1 | 24 January 2019 |
| | | US 2021-0296647 A1 | 23 September 2021 |
| | | WO 2018-048085 A1 | 15 March 2018 |
| JP 2018-087096 A | 07 June 2018 | JP 6967215 B2 | 17 November 2021 |
| | | WO 2018-096999 A1 | 31 May 2018 |
| KR 10-2022-0100242 A | 15 July 2022 | KR 10-2492040 B1 | 27 January 2023 |
| | | US 2022-0220003 A1 | 14 July 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230024513
- KR 1020240026192
- KR 20220068016


### Non-patent literature cited in the description


- *Electrochemistry Communications*, 2004, vol. 6, 1045-1050